(19) Europäisches Patentamt
European Patent Office
Office européen des brevets

(11) EP 1 125 961 B1

(12) # EUROPÄISCHE PATENTSCHRIFT

(45) Veröffentlichungstag und Bekanntmachung des Hinweises auf die Patenterteilung:
**03.11.2004 Patentblatt 2004/45**

(21) Anmeldenummer: **99929771.6**

(22) Anmeldetag: **09.07.1999**

(51) Int Cl.[7]: **C08G 65/26**, C08G 75/28, C08G 18/48

(86) Internationale Anmeldenummer:
**PCT/JP1999/003717**

(87) Internationale Veröffentlichungsnummer:
**WO 2000/002952 (20.01.2000 Gazette 2000/03)**

(54) **NEUE POLYOXYALKYLENPOLYOLE UND VERFAHREN ZUR HERSTELLUNG EINES POLYMERS MIT RINGÖFFNUNG**

NOVEL POLYOXYALKYLENEPOLYOLS AND PROCESS FOR PRODUCING RING-OPENED POLYMER

NOUVEAUX POLYOXYALKYLENEPOLYOLS ET PROCEDE DE PRODUCTION D'UN POLYMERE A CYCLE OUVERT

(84) Benannte Vertragsstaaten:
**DE**

(30) Priorität: **10.07.1998 JP 21188298**
**30.03.1999 JP 8881299**

(43) Veröffentlichungstag der Anmeldung:
**22.08.2001 Patentblatt 2001/34**

(73) Patentinhaber: **SANYO CHEMICAL INDUSTRIES, LTD.**
**Kyoto-shi, Kyoto 605-0995 (JP)**

(72) Erfinder: **SATAKE, Munekazu,**
**Sanyo Chemical Industries, Ltd**
**Kyoto-shi, Kyoto 605-0995 (JP)**

(74) Vertreter: **Brehm, Hans-Peter et al**
**Patent- und Rechtsanwälte**
**Hansmann & Vogeser**
**Albert-Rosshaupter-Strasse 65**
**81369 München (DE)**

(56) Entgegenhaltungen:

| | |
|---|---|
| **EP-A- 0 352 819** | **JP-A- 2 247 220** |
| **JP-A- 3 244 632** | **JP-A- 4 300 920** |
| **JP-A- 9 188 754** | **JP-A- 57 108 120** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 125 961 B1

## Beschreibung

Die vorliegende Erfindung betrifft Polyoxyalkylen-monoole, deren Anteil an primären Hydroxylgruppen nicht weniger als 40% beträgt, sowie Polyoxyalkylenpolyole, deren Anteil an primären Hydroxylgruppen nicht weniger als 60% beträgt. Ferner betrifft die Erfindung ein Verfahren zur Herstellung von durch Ringöffnungspolymerisation erhältlichen Produkten durch ringöffnende Additionspolymerisation einer heterocyclischen Verbindung. Weiterhin betrifft die Erfindung die Verwendung dieser Polyoxyalkylen-monoole und -polyole sowie der Verfahrensprodukte für den Einsatz als Polyolkomponenten für Polyurethanharze, Epoxyharze und andere thermohärtende bzw. duroplastische Harze. Mehr im einzelnen betrifft die Erfindung Polyoxyalkylen-polyole, die eine erhöhte Reaktivität gegenüber Isocyanatgruppen und ähnlichen Gruppen aufweisen, ohne dass ihre Hydrophobizität beeinträchtigt ist. Mehr im einzelnen betrifft die Erfindung ein Verfahren zur Durchführung einer Ringöffnungspolymerisation von cyclischen Verbindungen in Gegenwart eines bestimmten Katalysators. Weiterhin betrifft die Erfindung die Anwendung der so erzeugten Verbindungen als Polyolkomponenten für thermohärtende Harze.

Durch eine ringöffnende Umsetzung eines Monoepoxid, wie etwa eines Alkylenoxid, zusammen mit einer, aktive(n) Wasserstoffatom(e) enthaltenden Verbindung erhältliche Polyole, wie etwa Polyoxyalkylen-polyole werden in weitem Umfang als Ausgangsmaterialien für thermohärtende Harze, wie etwa Polyurethane, ferner als oberflächenaktive Mittel bzw. Tenside, als Schmiermittel und in anderen Anwendungsbereichen eingesetzt.

Das Verfahren, soweit es zur Herstellung von Polyethem in weitem Umfange eingesetzt wird, sieht vor, ein Monoepoxid in Gegenwart eines alkalischen Katalysators umzusetzen. Als alkalische Katalysatoren werden Alkalimetallverbindungen, wie etwa Kaliumhydroxid und Natriumhydroxid eingesetzt. Als eine Alternative ist ein Verfahren bekannt geworden, entsprechend dem die Umsetzung eines Monoepoxid mit Hilfe eines $BF_3$-Komplexes, eines Zinkhexacyanokobaltat oder eines ähnlichen, zusammengesetzten Metallcyanidkomplexes als Katalysator durchgeführt wird.

Die durch die ringöffnende Umsetzung eines $\alpha,\beta$-Epoxid wie etwa Propylenoxid, Epichlorhydrin, Styroloxid oder Laurylenoxid in Gegenwart eines derartigen Katalysators erhaltenen Polyoxyalkylen-polyole weisen einen sehr geringen Anteil an endständigen primären Hydroxylgruppen auf (zumeist nicht mehr als 2 %, wenn Kaliumhydroxid als Katalysator eingesetzt wird); den größten Teil der endständigen Hydroxylgruppen bilden sekundäre Hydroxylgruppen. Deshalb weisen derartige Polyole eine unzureichende Reaktivität für die Anwendung als Polyolkomponenten zur Erzeugung thermohärtender bzw. duroplastischer Harze auf. Zum Beispiel haben sie eine geringe Reaktivität gegenüber Isocyanatgruppen in isocyanathaltigen Verbindungen (wie etwa Tolylendiisocyanat und dergleichen) und haben eine unzureichende Reaktivität, wenn sie als Polyolkomponenten für Urethanharze eingesetzt werden.

Das Dokument EP-A2-0 362 819 betrifft Polyätherverbindungen mit einer, ein aktives Wasserstoffatom enthaltenden Gruppe an einem primären Kohlenstoffatom, sowie ein Verfahren zu deren Herstellung. Zur Herstellung von Polyätherverbindungen, die wenigstens zwei Gruppen mit aktiven Wasserstoffatomen pro Molekül aufweisen, sieht das Verfahren nachfolgende Verfahrensschritte vor:

*a)* Es werden Polyoxyalkylen-Moleküle gebildet, die wenigstens eine, ein aktives Wasserstoffatom liefemde Vorstufe enthalten, in dem

- ein Reaktionsgemisch, das wenigstens ein 1,2-Epoxyalkan und wenigstens einen Schutzgruppenbildner, oder
- ein Reaktionsgemisch, das wenigstens ein substituiertes Alkylenoxid und wenigstens einen intramolekularen Schutzgruppenbildner enthält,
- wobei der Schutzgruppenbildner eine funktionale Gruppe hat, die in eine Gruppe mit einem aktiven Wasserstoffatom umgewandelt werden kann, die sich an einem primären Kohlenstoffatom befindet,
- solchen Bedingungen ausgesetzt werden, die eine Polymerisation des 1,2-Epoxyalkan veranlassen;

*b)* wenigstens zwei der so gebildeten Polyoxyalkylen-Moleküle werden mit Hilfe eines Verknüpfungsmittels verknüpft, um ein verknüpftes Molekül zu bilden, das wenigstens zwei Endgruppen hat, an denen sich je eine Vorstufe für die, das aktive Wasserstoffatom enthaltende Gruppe befindet; und

*c)* die Vorstufen für die, das aktive Wasserstoffatom enthaltende Gruppe an diesen Endgruppen des verknüpften Moleküls werden in aktiven Wasserstoff enthaltende Gruppen umgewandelt, die sich an primären Kohlenstoffatomen befinden.

Nach einer beispielhaften Ausführungsform. dieses Verfahrens wird eine Lösung eines aktiven Porphyrin-Katalysators in Dichlormethan mit Benzylalkohol versetzt, der als Schutzgruppenbüdner dient. Durch Zugabe von Propylenoxid und Additionspolymerisation wird ein Poly(propylenoxid)-Polymer erhalten, das an einem Ende eine sekundäre Hydroxylgruppe und an dem anderen Ende eine Benzylgruppe aufweist. Durch katalytische hydrierende Spaltung mit Hilfe von Palladium wird die Benzylgruppe entfernt und an diesem Molekülende eine primäre Hydroxylgruppe

erzeugt. Das Produkt enthält etwa 50% endständige primäre Hydroxylgruppen und 50% endständige sekundäre Hydroxylgruppen.

Altemativ kann das so erzeugte Poly(propylenoxid)-Polymer mit als Brückenbildner dienendem Terephthaloylchlorid umgesetzt werden, wobei die sekundären Hydroxylgruppen verestert werden, und Terephthaloylester erhalten werden, die endständige Benzylgruppen enthalten. Diese endständigen Benzylgruppen werden durch die bereits beschriebene hydrierende Spaltung entfernt, wobei an diesen Molekülenden primäre Hydroxylgruppen gebildet werden. Es wird ein Terephthaloyl-Brücken enthaltendes Polyalkylen-polyol erhalten, bei dem 87% der Hydroxylgruppen primäre Hydroxylgruppen sind.

Anstelle von dem Terephthaloylchlorid-Verknüpfungsmittel können auch andere, als Verknüpfungsmittel und Brückenbildner dienende polyfunktionale Säurehalogenide und polyfunktionale Isocyanate eingesetzt werden. In jedem Falle enthalten die Produkte Brückengruppen, die ihrerseits carboxylhaltige Gruppen in Form der zweiwertigen Carbonsäureestergruppe [-C(=O)-O-] oder in Form der zweiwertigen Carbonsäureamidgruppe [-C(=O)-NH-] enthalten.

Zur Gewährleistung einer ausreichenden Reaktivität gegenüber Isocyanatgruppen müssen die endständigen Hydroxylgruppen als primäre Hydroxylgruppen vorliegen. Für diesen Zweck ist ein Verfahren bekannt geworden, das die Durchführung einer ringöffnenden Umsetzung von Alkylenoxiden vorsieht, um Polyoxyalkylen-polyole

zu erhalten; anschließend wird an diesen Polyoxyalkylen-polyolen eine ringöffnende Umsetzung mit Ethylenoxid durchgeführt, um so endständige primäre Hydroxylgruppen zu erzeugen. Da jedoch die Polyethylenoxidanteile hydrophil sind, vermindert dieses Verfahren die Hydrophobizität der Polyoxyalkylen-polyole. Wenn daher solche Polyole eingesetzt werden, ergibt sich ein Problem dahingehend, dass die physikalischen Eigenschaften und andere charakteristische Eigenschaften der so erhaltenen Urethanharze in erheblichem Umfang in Abhängigkeit von der Umgebungsfeuchtigkeit (Luftfeuchtigkeit) schwanken.

Andererseits ist zur ringöffnenden Polymerisation (nachstehend kurz auch: Ringöffnungspolylmerisation) von Carbonaten, Thiocarbonaten, Dithiocarbonaten und ähnlichen cyclischen Verbindungen ein Verfahren benutzt worden, das diese Ringöffnungspolymerisation in Gegenwart eines sauren Katalysators, wie etwa $BF_3$ durchführt.

Jedoch tritt bei diesem Verfahren zur Erzeugung von durch Ringöffnungspolymerisation erhältlichen Produkten, das die ringöffnende Polymerisation von Carbonaten, Thiocarbonaten, Dithiocarbonaten und ähnlichen cyclischen Verbindungen in Gegenwart eines solchen Katalysators vorsieht, ein Problem dahingehend auf, das im Verlauf der ringöffnenden Additionspolymerisation solcher cyclischen Verbindungen Kohlendioxid, Kohlenoxysulfid, Kohlendisulfid oder dergleichen freigesetzt wird, was zu geringen Ausbeuten der aus diesen cyclischen Verbindungen durch Ringöffnungspolymerisation erhältlichen Produkten führt. Darüber hinaus muss beim Verfahrensschritt der ringöffnenden Polymerisation ein derartiger Katalysator fast in äquivalenter Menge zu den wachsenden Kettenenden eingesetzt werden, so dass eine große Menge an Katalysator in den so erzeugten Polymeren verbleibt. In bestimmten Anwendungsgebieten der so durch Ringöffnungspolymerisation erhaltenen Produkte hat der Restgehalt an Katalysator deutlich nachteilige Wirkungen; daher ist es erforderlich, den Katalysator im Anschluss an die Ringöffnungspolymerisation in einem weiteren Behandlungsschritt zu entfernen.

Im Hinblick auf den vorstehend dargelegten Stand der Technik und dessen Probleme und Schwierigkeiten besteht die Aufgabe der vorliegenden Erfindung darin, Polyolzusammensetzungen bereitzustellen, die eine ausreichend Reaktivität für die Anwendung als Materialien für thermohärtende Harze aufweisen, ohne die Hydrophobizität der Polyoxyalkylen-polyole zu beeinträchtigen. Weiterhin sollen mit der vorliegenden Erfindung Polyoxyalkylen-polyole bereitgestellt werden, die für die Anwendung in diesen Polyolzusammensetzungen geeignet sind. Weiterhin soll mit der vorliegenden Erfindung ein Verfahren zur Herstellung von durch Ringöffnungspolymerisation erhältlichen Produkten angegeben werden, entsprechend dem eine cyclische Verbindung einer ringöffnenden Additionspolymerisation in Gegenwart eines bestimmten Katalysators unterworfen wird.

Die zur vorliegenden Anmeldung benannten Erfinder haben intensive Untersuchungen durchgeführt, um die vorstehend genannten Probleme einer Lösung zuzuführen; als Ergebnis dieser Untersuchungen ist festgestellt worden, dass:

(1) Polyoxyalkylen-polyole, deren Anteil an endständigen primären Hydroxylgruppen nicht weniger als 40 % beträgt, eine ausreichende Reaktivität besitzen, damit derartige Polyoxyalkylen-polyole als Polyolkomponenten für thermohärtende Harze einsetzbar sind, während gleichzeitig die Hydrophobizität dieser Polyole erhalten bleibt;
(2) derartige Polyoxyalkylen-polyole, deren Anteil an endständigen primären Hydroxylgruppen nicht weniger als 40 % beträgt, dadurch erhalten werden können, dass eine epoxy-haltige Verbindung zu einer aktiven Wasserstoff enthaltenden Verbindung in Gegenwart eines Katalysators hinzugefügt wird, der eine bestimmte chemische Struktur aufweist; und
(3) die Ausbeute an diesen Polyoxyalkylen-polyolen sehr hoch ist, wenn eine cyclische Verbindung der ringöffnenden Additionspolymerisation in Gegenwart eines bestimmten Katalysators unterworfen wird. Diese Feststellungen haben nunmehr zur Vervollständigung der vorliegenden Erfindung geführt.

Somit betrifft ein erster Gesichtspunkt der vorliegenden Erfindung

Ein Polyoxyalkylen-polyol oder-monool (I)

der nachstehenden allgemeinen Formel (1),

bei dem nicht weniger als 40% der endständig angeordneten,

hydroxyl-haltigen Gruppen des Polyoxyalkylen-monool oder bei dem nicht weniger als 60% der endständig angeordneten

hydroxylhaltigen Gruppen des Polyoxyalkylen-polyol, also der Gruppen -AO-H, primäre Hydroxylgruppen enthaltende Gruppen der nachstehenden allgemeinen Formel (2) sind:

$$R^1\text{-[-(ZO)}_p\text{-(AO)}_q\text{-H]}_m \quad (1)$$

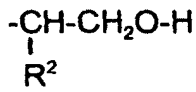

(2)

wobei in der Formel (1):

$R^1$ für eine m-wertige Gruppe steht, die durch Entfernung von einem oder mehreren aktiven Wasserstoffatom(en) aus den nachfolgenden Verbindungen erhalten worden ist, nämlich Wasser, eine Alkoholverbindung, eine Phenolverbindung, eine amino-haltige Verbindung, eine thiol-haltige Verbindung und eine Phosphorsäureverbindung;

Z für eine $C_{2-12}$-Alkylengruppe oder für eine $C_{6-12}$-Cycloalkylengruppe steht, von denen jede wenigstens ein Halogenatom und/oder eine Arylgruppe als Substituent(en) enthalten kann;

A für eine $C_{3-12}$-Alkylengruppe oder für eine $C_{6-12}$-Cycloalkylengruppe steht, von denen jede wenigstens ein Halogenatom und/oder eine Arylgruppe als Substituent(en) enthalten kann;

"m" eine ganze Zahl von 1 oder 2 bis 100 ist;

"p" eine ganze Zahl von 0 oder 1 oder größer ist; und

"q" eine ganze Zahl von 1 oder größer ist;

mit der weiteren Maßgabe, daß die Summe aus "p + q" einen Wert von 1 bis 200 hat; und
ferner, wobei in der Formel (2):

$R^2$ für eine $C_{1-10}$-Alkylgruppe oder für eine $C_{6-10}$-Arylgruppe steht, von denen jede mit einem oder mehreren Halogenatom(en) substituiert sein kann.

Ein zweiter Gesichtspunkt der vorliegenden Erfindung betrifft ein Verfahren zur Herstellung von, durch Ringöffnungspolymerisation erhältlichen Produkten,
wobei eine heterocyclische Verbindung (d)
der nachstehenden allgemeinen Formel (5)
zusammen mit einer aktive(n) Wasserstoffatom(e) enthaltenden Verbindung (b)
der nachstehenden allgemeinen Formel (3)
in Gegenwart von wenigstens einem Katalysator (c),
ausgewählt aus Verbindungen mit den nachstehenden allgemeinen Formeln (4-1), (4-2) und (4-3)
einer ringöffnenden Additionspolymerisation unterworfen wird.

$$R^1\text{-}[\text{-(ZO)}_p\text{-H}]_m \quad (1)$$

$$X\text{-(-}R^3)_2 \quad (4\text{-}1)$$

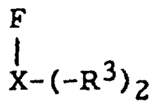

(4-2)

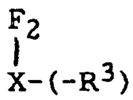

(4-3)

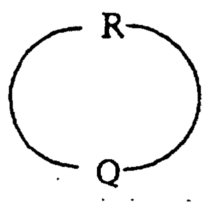

(5)

wobei in der Formel (3):

$R^1$ für eine m-wertige Gruppe steht, die durch Entfernung von einem oder mehreren aktiven Wasserstoffatom(en) aus den nachfolgenden Verbindungen erhalten worden ist, nämlich Wasser, eine Alkoholverbindung, eine Phenolverbindung, eine amino-haltige Verbindung, eine carboxyl-haltige Verbindung, eine thiol-haltige Verbindung und eine Phosphorsäureverbindung ;

Z für eine $C_{2-12}$-Alkylengruppe oder für eine $C_{6-12}$-Cycloalkylengruppe steht, von denen jede wenigstens ein Halogenatom und/oder eine Arylgruppe als Substituent(en) enthalten kann;

"m" eine ganze Zahl von 1 oder 2 bis 100 ist; und

"p" eine ganze Zahl von 0 oder 1 bis 199 ist;

in jeder der Formeln (4-1), (4-2) und (4-3):

X für ein Boratom oder für ein Aluminiumatom steht;

F für ein Fluoratom steht; und

$R^3$ für eine substituierte oder unsubstituierte Phenylgruppe der nachstehenden allgemeinen Formel (6) und/oder für eine tertiäre Alkylgruppe der nachstehenden allgemeinen Formel (7) steht:

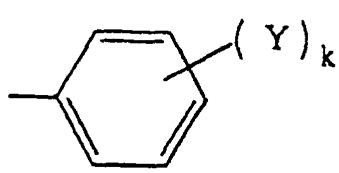

(6)

wobei in der Formel (6):

Y für ein Wasserstoffatom, für eine $C_{1-4}$-Alkylgruppe, für ein Halogenatom, für eine Nitrogruppe oder für eine Cyanogruppe steht; und
"k" eine ganze Zahl von 0 bis 5 ist,

mit der weiteren Maßgabe, daß dann wenn "k" einen Wert von 2 oder größer hat, die dann vorhandene Mehrzahl an Y-Gruppen gleich oder verschieden sein kann;

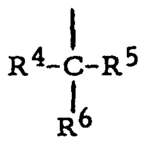

(7)

wobei in der Formel (7):

$R^4$, $R^5$ und $R^6$ je unabhängig voneinander für eine $C_{1-4}$-Alkylgruppe stehen, mit der weiteren Maßgabe, daß dann wenn eine Mehrzahl von
$R^3$-Gruppen vorhanden ist, diese gleich oder verschieden sein können;

wobei in der Formel (5):

R für eine $C_{3-12}$-Alkylengruppe steht, die wenigstens ein Halogenatom und/oder eine Arylgruppe als Substituent (en) enthalten kann;
Q für eine zwei-wertige organische Gruppe steht, die ausgewählt ist aus -O-, -S-, -NH-, -O(CO)O-, -S(CO)O-, -O (CS)O-, -O(CO)S-, -O(CS)S-, -S(CS)O-, -S(CO)S-, -S(CS)S-, -COO-, -CSO-, -COS-, -CSS-, -CONH- und -N=C($R^7$)-O-
wobei $R^7$ wiederum für eine $C_{1-12}$-Alkylgruppe oder für eine $C_{6-12}$-Cycloalkylgruppe steht, von denen jede mit einer Alkylgruppe oder einer $C_{6-12}$-Arylgruppe substituiert sein kann, die wiederum mit einem Halogenatom substituiert sein kann.

Weitere Gesichtspunkte der vorliegenden Erfindung betreffen:

- Polyolzusammensetzungen (III) für die Herstellung von thermohärtenden bzw. duroplastischen Harzen, welche die vorstehend dargelegten Polyoxyalkylen-polyole oder -monoole (I) aufweisen;

- durch Ringöffnungspolymerisation erhältliche Produkte, welche durch das vorstehend genannte Verfahren erhalten worden sind;

- insbesondere Polyolzusammensetzungen (II) für die Herstellung von thermohärtenden bzw. duroplastischen Harzen, welche diese, durch Ringöffnungspolymerisation erhältlichen Produkte aufweisen; und

- ein Verfahren zur Herstellung von Polyurethanharzen, wobei Polyolkomponenten und Polyisocyanate (e) miteinander umgesetzt werden, wobei als Polyolkomponenten diese vorstehend genannten Polyolzusammensetzungen (II) oder (III) eingesetzt werden.

Wie dargelegt, betrifft ein erster Gesichtspunkt der vorliegenden Erfindung Polyoxyalkylen-polyole oder [-monoole] (I) der vorstehend angegebenen, allgemeinen Formel (1), bei denen nicht weniger als 60% bzw [40 %] der endständig angeordneten, hydroxyl-haltigen Gruppen, also der Gruppen -AO-H primäre Hydroxylgruppen enthaltende Gruppen der vorstehend angegebenen allgemeinen Formel (2) sind.
In der Formel (1) steht $R^1$ für eine m-wertige Gruppe, die durch Entfernung von einem oder mehreren aktiven Wasserstoffatom(en) aus den nachfolgenden Verbindungen erhalten worden ist, nämlich Wasser, eine Alkoholverbindung, eine Phenolverbindung, eine amino-haltige Verbindung, eine thiol-haltige Verbindung und eine Phosphorsäureverbindung. Hierbei ist "m" eine ganze Zahl von 1 (im Falle der Monoole) oder eine ganze Zahl von 2 bis 100 (im Falle der Polyole).
Hierbei kann $R^1$ eine Gruppe sein, die aus einer, "m" aktive Wasserstoffatom(e) enthaltenden Verbindung (a) durch Entfernung dieser aktive(n) Wasserstoffatom(e) erhalten worden ist. Als derartige Verbindung (a) kommen beispielsweise in Betracht: hydroxyl-haltige Verbindungen, amino-haltige Verbindungen, thiol-haltige Verbindungen,

Phosphorsäureverbindungen; ferner Verbindungen, die zwei oder mehr, aktiven Wasserstoff enthaltende, funktionale Gruppen innerhalb eines Moleküls aufweisen; und ferner Gemische aus zwei oder mehr dieser Verbindungen.

Als solche hydroxyl-haltige Verbindungen seien hier neben anderen genannt: Wasser, ein-basische Alkohole, mehr-basische (zwei-basische bis acht-basische) Alkohole, Phenole und Polyphenole. Mehr im einzelnen seien hier genannt: ein-basische Alkohole wie etwa Methanol, Ethanol, Butanol und Octanol; zwei-basische Alkohole wie etwa Ethylenglycol, Propylenglycol, 1,3-Butylenglycol, 1,4-Butandiol, 1,6-Hexandiol, 3-Methylpentandiol, Diethylenglycol, Neopentylglycol, 1,4-Bis (hydroxymethyl)-cyclohexan, 1,4-Bis(hydroxyethyl)-benzol und 2,2-Bis(4,4'-hydroxycyclohexyl)-propan; ferner drei-basische Alkohole wie etwa Glycerin und Trimethylolpropan; ferner vier- bis acht-basische Alkohole wie etwa Pentaerythritol, Diglycerin, -Methylglucosid, Sorbitol, Xylitol, Mannitol, Dipentaerythritol, Glucose, Fructose und Sucrose; ferner Phenole wie etwa Phenol und Cresol; ferner Polyphenole wie etwa Pyrogallol, Catechol und Hydrochinon; ferner Bisphenole wie etwa Bisphenol A, Bisphenol F und Bisphenol S; ferner Polybutadien-polyole; weiterhin vom Rizinusöl abgeleitete Polyole; und schließlich polyfunktionale Polyole (zum Beispiel mit 2 bis 100 funktionalen Gruppen), wie etwa Hydroxyalkyl-(meth)acrylatcopolymere und Poly(vinylalkohol)e neben anderen Verbindungen dieser Art.

Als derartige amino-haltige Verbindungen seien hier beispielsweise genannt: Amine, Polyamine, Aminoalkohole und dergleichen. Mehr im einzelnen seien hier genannt: Ammoniak; Monoamine, wie etwa $C_{1-20}$-Alkylamine (wie z.B. Butylamin) und Anilin; ferner aliphatische Polyamine, wie etwa Ethylendiamin, Trimethylendiamin, Hexamethylendiamin und Diethylentriamin; ferner heterocyclische Polyamine, wie etwa Piperazin und N-Aminoethylpiperazin; ferner alicyclische Polyamine, wie etwa Dicyclohexyl-methandiamin und Isophorondiamin; ferner aromatische Polyamine, wie etwa Phenylendiamin, Tolylendiamin, Diethyltolylendiamin, Xylylendiamin, Diphenylmethan-diamin, Diphenylether-diamin und Polyphenyl-methan-polyamin; ferner Alkanolamine, wie etwa Monoethanolamin, Diethanolamin, Triethanolamin und Triisopropanolamin; ferner Polyamidpolyamine, die durch Kondensation einer Dicarbonsäure mit einem Oberschuß an Polyamin erhalten werden; ferner Polyether-polyamine; ferner Hydrazine (Hydrazin, Monoalkylhydrazine und dergleichen); ferner Dihydrazide (Bernsteinsäure-dihydrazid, Adipinsäure-dihydrazid, Isophthalsäure-dihydrazid, Terephthalsäure-dihydrazid und dergleichen); ferner Guanidine (Butylguanidin, 1-Cyanoguanidin und dergleichen); ferner Dicyandiamide und weitere Verbindungen dieser Art; und schließlich Mischungen aus zwei oder mehr der vorstehend genannten aminohaltigen Verbindungen.

Als derartige thiol-haltige Verbindungen, typischerweise Polythiolverbindungen, seien hier neben anderen Verbindungen dieser Art genannt: Zwei-wertige bis acht-wertige Polythiole. Mehr im einzelnen seien hier genannt: Ethylen-dithiol, Propylen-dithiol, 1,3-Butylen-dithiol, 1,4-Butan-dithiol, 1,6-Hexan-dithiol, 3-Methylpentan-dithiol und weitere Verbindungen dieser Art.

Als derartige Phosphorsäureverbindungen seien hier genannt: Phosphorsäure, phosphorige Säure und Phosphonsäuren.

Unter diesen, aktiven Wasserstoff enthaltenden Verbindungen (a) sind hydroxyl-haltige Verbindungen, aminohaltige Verbindungen und Wasser bevorzugt; unter diesen wiederum sind Alkohole und Amine noch weiter bevorzugt.

In der vorstehend genannten Formel (1) steht Z für eine $C_{2-12}$-Alkylengruppe oder für eine $C_{6-12}$-Cycloalkylengruppe, von denen jede wenigstens ein Halogenatom und/oder eine Arylgruppe als Substituent(en) enhalten kann. Mehr im einzelnen seien hier neben weiteren Verbindungen dieser Art genannt: Ethylen, Propylen, Butylen, Chlorpropylen, Brompropylen, Laurylen, Phenylethylen, Chlorphenylethylen, 1,2-Cyclohexylen und dergleichen; weiterhin Mischungen aus zwei oder mehr Verbindungen dieser Art. Bevorzugt sind hier Propylen-, Butylen-, und Ethylen-Gruppen; besonders bevorzugt sind hier Propylen- und Butylen-Gruppen. Sofern hier die Beibehaltung der Hydrophobizität der als Produkt erhaltenen Polyoxyalkylen-polyole oder -monoole (I) betrachtet wird, ist die Anwendung von Propylen-, Butylen- oder ähnlichen Gruppen oder die gemeinsame Anwendung von Ethylen- und anderen Alkylen-Gruppen zu empfehlen.

In der vorstehenden allgemeinen Formel (1) steht A für eine $C_{3-12}$-Alkylengruppe oder für eine $C_{6-12}$-Cycloalkylengruppe, von denen jede wenigstens ein Halogenatom und/oder eine Arylgruppe als Substituent(en) enthalten kann. Mehr im einzelnen seien hier beispielsweise genannt: Propylen, Butylen, Chlorpropylen, Brompropylen, Laurylen, Phenylethylen, Chlorphenylethylen, 1,2-Cyclohexylen und dergleichen; ferner Kombinationen aus zwei oder mehr Verbindungen dieser Art. Sofern die Ethylengruppe eingesetzt wird, ist es im Hinblick auf die Hydrophobizität der als Produkte angestrebten Polyoxyalkylenpolyole oder-monoole (I) empfehlenswert, Ethylen in Kombination mit einer anderen Alkylengruppe einzusetzen.

Im Rahmen der vorliegenden Erfindung beinhalten die endständig angeordneten hydroxyl-haltigen Gruppen, also die Gruppen -AO-H, unter anderem die Gruppen $-(AO)_q-H$ in der oben angegebenen allgemeinen Formel (1) zwei Typen, nämlich primäre Hydroxylgruppen enthaltende Gruppen der oben angegebenen allgemeinen Formel (2) und sekundäre Hydroxylgruppen enthaltende Gruppen der nachstehend angegebenen allgemeinen Formel (2'). Die Polyoxyalkylen-polyole oder -monoole (I) nach dem ersten Gesichtspunkt der vorliegenden Erfindung sind dadurch gekennzeichnet, daß der Gehalt an primäre Hydroxylgruppen enthaltenden Gruppen der oben angegebenen allgemeinen Formel (2) nicht weniger als 40 % ausmacht, vorzugsweise nicht weniger als 60 % ausmacht, relativ zu der Gesamtsumme der endständigen Hydroxylgruppen in den Polyoxyalkylen-polyolen oder -monoolen (I).

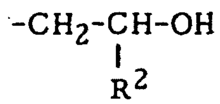

(2')

In den oben angegebenen allgemeinen Formeln (2) und (2') steht $R^2$ für eine $C_{1-10}$-Alkylgruppe oder für eine $C_{6-10}$-Arylgruppe, von denen jede mit einem oder mehreren Halogenatom(en) substituiert sein kann. Mehr im einzelnen seien hier beispielsweise genannt: lineare Alkylgruppen, wie etwa Methyl, Ethyl und Propyl; verzweigte Alkylgruppen, wie etwa Isopropyl; Phenyl und substituierte Phenylgruppen, wie etwa p-Methylphenyl; substituierte Alkylgruppen, wie etwa Chlormethyl, Brommethyl, Chlorethyl und Bromethyl; substituierte Phenylgruppen wie etwa p-Chlorphenyl und p-Bromphenyl, sowie Kombinationen aus zwei oder mehr Verbindungen dieser Art.

Der Index "p" ist eine ganze Zahl mit einem Wert von 0 oder 1 oder größer; der Index "q" ist eine ganze Zahl mit einem Wert von 1 oder größer; jedoch mit der Maßgabe, daß die Summe "p + q" einen Wert von 1 bis 200 hat. Zumeist ist "p" eine ganze Zahl von 0 bis 199, vorzugsweise eine ganze Zahl von 0 bis 100; zumeist ist "q" eine ganze Zahl von 1 bis 200, vorzugsweise eine ganze Zahl von 1 bis 100; und die Summe "p + q" hat vorzugsweise einen Wert von 1 bis 100.

Die erfindungsgemäßen Polyoxyalkylen-polyole oder -monoole (I) haben zumeist ein mittleres zahlenmäßiges Molekulargewicht von 400 bis 100.000, vorzugsweise von 400 bis 20.000. Dieses Molekulargewicht wird entsprechend und angepaßt an den Anwendungszweck ausgewählt, z.B. entsprechend den physikalischen Eigenschaften, die für thermohärtende bzw. duroplastische Harze wie etwa Polyurethanharze gefordert werden, die aus diesen Polyoxyalkylen-polyolen oder -monoolen (I) hergestellt werden.

Als spezifische Beispiele erfindungsgemäßer Polyoxyalkylen-polyole (I-1) oder Polyoxyalkylen-monoole (I-2) können hier beispielsweise genannt werden:

> von Wasser abgeleitete Propylenoxid-addukte, von Methanol abgeleitete Propylenoxid-addukte, von Glycerin abgeleitete Propylenoxid-addukte, von Ammoniak abgeleitete Propylenoxid-addukte, von Wasser abgeleitete Butylenoxid-addukte und davon abgeleitete Propylenoxid-addukte, von Methanol abgeleitete Butylenoxid-addukte und davon abgeleitete Propylenoxid-addukte, von Glycerin abgeleitete Butylenoxid-addukte und davon abgeleitete Propylenoxid-addukte, von Ammoniak abgeleitete Butylenoxid-addukte und davon abgeleitete Propylenoxid-addukte, und andere Verbindungen dieser Art.

Wie vorstehend bereits ausgeführt, beträgt der Anteil an primäre Hydroxylgruppen enthaltenden Gruppen der vorstehenden allgemeinen Formel (2) relativ zu der Gesamtheit an endständig angeordneten Hydroxylgruppen in den erfindungsgemäßen Polyoxyalkylen-polyolen (I) (dieser Anteil wird im Rahmen der vorliegenden Unterlagen auch als "Anteil der endständigen primären Hydroxylgruppen bezeichnet") nicht weniger als 60 %. Bei den erfindungsgemäßen Polyoxyalkylen-monoolen beträgt dieser Anteil an enständig angeordneten Hydroxylgruppen nicht weniger als 40 %, vorzugsweise nicht weniger als 60 %. Dieser Anteil an endständigen primären Hydroxylgruppen wird auf der Basis der Daten berechnet, die nach einer Vorbehandlung der Probe, etwa einer Veresterung, mit Hilfe der $^1$H-Kernresonanzspektroskopie erhalten werden.

Ein Beispiel dieser $^1$H-Kernresonanzmessung wird nachstehend im einzelnen beschrieben:

Vorbereitung der Probe

Ungefähr 30 mg der Probe werden in ein Kernresonanz-Prüfröhrchen abgewogen, das einen Durchmesser von 5 mm aufweist; daraufhin werden etwa 0,5 ml deuteriertes Lösungsmittel zugesetzt, um die Probe zu lösen. Anschließend werden etwa 0,1 ml Trifluor-essigsäure-anhydrid zugesetzt, und die danach erhaltene Lösung wird als Probe für die Messung verwendet. Als deuteriertes Lösungsmittel kommen beispielsweise deuteriertes Chloroform, deuteriertes Toluol, deuteriertes Dimethylsulfoxid, deuteriertes Dimethylformamid und ähnliche deuterierte Lösungsmittel in Betracht; hierbei soll ein solches Lösungsmittel ausgewählt werden, in welchem die Probe löslich ist.

Messung des Kernresonanzspektrums

Die Ermittlung der $^1$H-Kernresonanzspektren der Proben wird in üblicher Weise durchgeführt.

Berechnung des Anteils der endständigen primären Hydroxylgruppen

Im Verlauf der vorstehend beschriebenen Vorbehandlung reagieren die endständigen Hydroxylgruppen des als Probe vorgelegten Polyoxyalkylen-polyol mit Trifluor-essigsäure-anhydrid unter Bildung von Trifluoracetatesterderivaten. Als Folge wird das Signal der an eine primäre Hydroxylgruppe gebundenen Methylengruppe etwa bei 4,3 ppm beobachtet, während die an eine sekundäre Hydroxylgruppe gebundene Methylengruppe ein Signal bei etwa 5,2 ppm liefert. Der Anteil an endständigen primären Hydroxylgruppen wird entsprechend der nachstehenden Gleichung berechnet:

Anteil der endständigen primären Hydroxylgruppen (%) =

$$[a/ (a + 2 \times b) ] \times 100$$

hierbei ist a der Wert des Integrals für das Signal bei ungefähr 4,3 ppm aus den an primäre Hydroxylgruppen gebundenen Methylengruppen; und b ist der Wert des Integrals für das Signal bei etwa 5,2 ppm aus den an sekundäre Hydroxylgruppen gebundenen Methylengruppen.

Die aktive(n) Wasserstoffatom(e) enthaltene Verbindung (b), die entsprechend dem erfindungsgemäßen Verfahren zur Herstellung von, durch Ringöffnungspolymerisation erhältlichen Produkten eingesetzt wird, entspricht der oben angegebenen, allgemeinen Formel (3). In dieser allgemeinen Formel (3) hat $R^1$ die oben angegebene Bedeutung und als Beispiele für entsprechende Verbindungen können die oben angegebenen Verbindungen dienen.

In der allgemeinen Formel (3) steht Z für eine $C_{2-12}$-Alkylengruppe oder für eine $C_{6-12}$-Cycloalkylengruppe, von denen jede wenigstens ein Halogenatom und/oder eine Arylgruppe als Substituent(en) enthalten kann. Als Beispiele für solche Reste Z können ebenfalls die oben angegebenen beispielhaften Gruppen dienen.

In dieser allgemeinen Formel (3) ist "p" eine ganze Zahl von 0 oder 1 bis 199, vorzugsweise eine ganze Zahl von 0 bis 100. Weiterhin ist "m" eine ganze Zahl von 1 oder 2 bis 100.

Als spezifische Beispiele für die, aktiven Wasserstoff enthaltende Verbindung (b), in der "p" den Wert "0" hat, können beispielsweise die gleichen Verbindungen genannt werden, die oben bezüglich des ersten Gesichtspunkts der Erfindung für die Verbindung (a) mit (m) aktive(n) Wasserstoffatom(en) genannt worden sind.

Sofern "p" den Wert "1" oder größer hat, können - neben anderen Verbindungen dieser Art - Verbindungen genannt werden, die aus solchen Verbindungen, in denen "p" den Wert "0" hat, abgeleitet sind, nämlich Verbindungen (a) mit "m" aktive(n) Wasserstoffatom(en), die durch Additionsreaktion eines $C_{2-12}$-Alkylenoxids erhalten worden sind, hier beispielsweise Additionsprodukte von Propylenoxid, Butylenoxid oder dergleichen, an hydroxyl-haltige Verbindungen, an amino-haltige Verbindungen und dergleichen. Als spezifische Beispiele können hier genannt werden: von Wasser abgeleitete Propylenoxid-addukte (Polyoxypropylen-glycol), von Methanol abgeleitete Propylenoxid-addukte, von Glycerin abgeleitete Propylenoxid-addukte, von Wasser abgeleitete Butylenoxid-addukte, von Methanol abgeleitete Butylenoxid-addukte, von Glycerin abgeleitete Butylenoxid-addukte, von Ammoniak abgeleitete Propylenoxid-addukte, von Ammoniak abgeleitete Butylenoxid-addukte und weitere Verbindungen dieser Art.

Bei dem oben angegebenen Katalysator (c) handelt es sich um eine Verbindung, welche einer der oben angegebenen allgemeinen Formeln (4-1), (4-2) oder (4-3) entspricht. Dieser Katalysator kann zur ringöffnenden Additionspolymerisation von cyclischen Etherverbindungen, Carbonaten, Dithiocarbonaten und ähnlichen heterocyclischen Verbindungen eingesetzt werden, um dabei in guten Ausbeuten durch Ringöffnungspolymerisation erhältliche Produkte zu erhalten. Insbesondere kann dieser Katalysator zur ringöffnenden Additionspolymerisation von epoxyhaltigen Verbindungen eingesetzt werden, um auf diesem Wege Polyoxyalkylen-polyole mit einem hohen Anteil an endständigen primären Hydroxylgruppen zu erhalten, was offensichtlich vorher niemals erkannt und durchgeführt worden ist.

In jeder der vorstehend genannten allgemeinen Formeln (4-1), (4-2) und (4-3) steht X für ein Boratom oder für ein Aluminiumatom, vorzugsweise für ein Boratom.

In jeder der vorstehend angegebenen, allgemeinen Formeln (4-1), (4-2) und (4-3) steht $R^3$ für eine substituierte oder für eine unsubstituierte Phenylgruppe der oben angegebenen allgemeinen Formel (6) oder für eine tertiäre Alkylgruppe mit der oben angegebenen allgemeinen Formel (7). Sofern eine Mehrzahl von $R^3$-Gruppen vorliegt, können diese jeweils gleich oder verschieden sein.

In der oben angegebenen, allgemeinen Formel (6) steht Y für ein Wasserstoffatom, für eine $C_{1-4}$-Alkylgruppe, für ein Halogenatom, für eine Nitrogruppe oder für eine Cyanogruppe. Vorzugsweise steht hier Y für ein Wasserstoffatom, für ein Halogenatom oder für eine Cyanogruppe. Noch weiter bevorzugt steht hier Y für ein Halogenatom oder für eine Cyanogruppe.

Der Index "k" ist eine ganze Zahl von 0 bis 5.

Als spezifische Beispiele für substituierte oder unsubstituierte Phenylgruppen der vorstehend angegebenen

allgemeinen Formel (6) können hier genannt werden: Phenyl, Pentafluorphenyl, p-Methylphenyl, p-Cyanophenyl und p-Nitrophenyl neben anderen Phenylgruppen dieser Art. Vorzugsweise sind hier vorgesehen: Phenyl, Pentafluorphenyl und p-Cyanophenyl; noch weiter bevorzugt ist hier Phenyl und Pentafluorphenyl.

In der oben angegebenen allgemeinen Formel (7) stehen $R^4$, $R^5$ und $R^6$ je unabhängig voneinander für eine $C_{1-4}$-Alkylgruppe. Im einzelnen können hier genannt werden: Methyl, Ethyl, Propyl und Isopropyl neben weiteren Alkylgruppen dieser Art.

Als spezifische Beispiele der oben genannten, tertiären Alkylgruppe der allgemeinen Formel (7) können hier genannt werden: t-Butyl und t-Pentyl neben weiteren tertiären Alkylgruppen dieser Art.

Zu spezifischen, im Rahmen der vorliegenden Erfindung einsetzbaren Katalysatoren (c) gehören neben weiteren Verbindungen dieser Art: Triphenylboran, Diphenyl-t-butylboran, Tris(t-butyl)-boran, Triphenylaluminium, Diphenyl-t-butylaluminium, Tris(t-butyl)-aluminium, Tris(pentafluorphenyl)-boran, Bis(pentafluorphenyl)-t-butylboran, Tris (pentafluorphenyl)-aluminium, Bis(pentafluorphenyl)-t-butylaluminium, Bis(pentafluorphenyl)-fluoroboran, Di(t-butyl)-fluoroboran, (Pentafluorphenyl)-di-fluoroboran, (t-Butyl)-difluoroboran, Bis(pentafluorphenyl)-fluoroaluminium, Di(t-butyl)-fluoroaluminium, (Pentafluorphenyl)-difluoroaluminium, (t-Butyl)-difluoroaluminium und weitere Verbindungen dieser Art. Zu bevorzugten Katalysatoren (c) gehören hier Triphenylboran, Triphenylaluminium, Tris(pentafluorophenyl)-boran und Tris(pentafluorphenyl)-aluminium; zu noch weiter bevorzugten Katalysatoren (c) gehören hier Tris(pentafluorphenyl)-boran und Tris(pentafluorphenyl)-aluminium.

Die heterocyclische Verbindung (d), die entsprechend der vorliegenden Erfindung der ringöffnenden Additionspolymerisation unterworfen wird, entspricht der oben angegebenen allgemeinen Formel (5). Als spezifische Beispiele für diese heterocyclische Verbindung (d) können - neben anderen Verbindungen dieser Art genannt werden:

cyclische Ether, wie etwa Ethylenoxid, Propylenoxid, Butylenoxid, Styroloxid, Oxetan und Tetrahydrofuran;
cyclische Thioether, wie etwa Ethylensulfid;
Imine, wie etwa Ethylenimin;
cyclische Carbonate, wie etwa Ethylencarbonat;
cyclische Thiocarbonate, wie etwa Ethylenthiocarbonat;
cyclische Dithiocarbonate, wie etwa Ethylendithiocarbonat;
cyclische Lactone, wie etwa ε-Caprolacton; und
cyclische Lactame, wie etwa ε-Caprolactam.

Der molare Anteil der heterocyclischen Verbindung (d), die in Gegenwart des Katalysators (c) gemeinsam mit der, aktiven Wasserstoff enthaltenden Verbindung (b) der ringöffnenden Additionsreaktion unterworfen wird, um ein durch Ringöffnungs-Polymerisation erhältliches Produkt zu bilden, beträgt zumeist 1 bis 200 Mol(e), vorzugsweise 1 bis 100 Mol(e), pro aktivem Wasserstoff in der aktiven Wasserstoff enthaltenden Verbindung (b). Die Auswahl des Anteils erfolgt nach Maßgabe des Molekulargewichtes des durch Ringöffnungs-Polymerisation herzustellenden Produktes und in Anpassung an dessen Verwendungszweck.

Der Anteil an zugesetztem Katalysator (c) ist nicht kritisch, soll zumeist jedoch 0,0001 bis 10 Gew.-%, vorzugsweise 0,001 bis 1,0 Gew.-% betragen, je bezogen auf das herzustellende durch Ringöffnungs-Polymerisation erhältliche Produkt.

Im Rahmen der vorliegenden Erfindung erweist es sich als vorteilhaft, einen solchen Katalysator (c) einzusetzen, der eine bestimmte chemische Struktur aufweist, die eine hohe sterische Hinderung gewährleistet, weil dadurch der Anteil an Katalysator sehr wesentlich reduziert werden kann, im Vergleich mit herkömmlichen Alkalimetallhydroxid- und anderen Alkalikatalysatoren (die zumeist in Anteilen von 0,1 bis 10 Gew.-% eingesetzt werden).

Um die heterocyclische Verbindung (d) der ringöffnenden Additionsreaktion zu unterwerfen, können alle drei Komponenten, nämlich die aktiven Wasserstoff enthaltende Verbindung (b), die heterocyclische Verbindung (d) und der Katalysator (c) gleichzeitig zugegeben werden, oder die heterocyclische Verbindung (d) kann tropfenweise zu einem Gemisch aus der, aktiven Wasserstoff enthaltenden Verbindung (b) und dem Katalysator (c) hinzugefügt werden, um so die ringöffnende Additionsreaktion auszuführen, oder die heterocyclische Verbindung (d) und der Katalysator (c) können tropfenweise zu der aktiven Wasserstoff enthaltenden Verbindung (b) hinzugefügt werden, um so die ringöffnende Additionsreaktion auszuführen.

Im Hinblick auf die Kontrolle der Reaktionstemperatur ist vorzugsweise eine solche Verfahrensführung vorgesehen, entsprechend der die heterocyclische Verbindung (d) tropfenweise zu einer Mischung aus der aktiven Wasserstoff enthaltenden Verbindung (b) und dem Katalysator (c) hinzugefügt wird, oder eine solche Verfahrensführung, entsprechend der die heterocyclische Verbindung (d) und der Katalysator (c) tropfenweise zu den vorgelegten aktiven Wasserstoff enthaltenden Verbindung (d) hinzugefügt werden.

Die Reaktionstemperatur, bei welcher die heterocyclische Verbindung (d) gemeinsam mit der aktiven Wasserstoff enthaltenden Verbindung (b) dieser ringöffnenden Additionsreaktion unterworfen wird, beträgt zumeist 0°C bis 250°C, vorzugsweise 20°C bis 180°C.

Die entsprechend dem erfindungsgemäßen Herstellungsverfahren durch Ringöffnungs-Polymerisation hergestellten Produkte haben zumeist ein mittleres, zahlenmäßiges Molekulargewicht von 75 bis 100.000, vorzugsweise ein solches mittleres, zahlenmäßiges Molekulargewicht von 400 bis 20.000. Das Molekulargewicht wird mit der Maßgabe ausgewählt, daß es für den vorgesehenen Anwendungszweck geeignet ist. Soll beispielsweise das durch Ringöffnungs-Polymerisation erhältliche Polyoxyalkylen-polyol als Polyolzusammensetzung für die Erzeugung thermohärtender bzw. duroplastischer Harze wie beispielsweise Polyurethanharze eingesetzt werden, dann ist es empfehlenswert das mittlere, zahlenmäßige Molekulargewicht nach Maßgabe der physikalischen Eigenschaften auszuwählen, die für diese Polyurethanharze gefordert werden.

Das so durch Ringöffnungs-Polymerisation erzeugte Produkt enthält den Katalysator (c). Je nach Anwendungszweck dieses Produktes kann eine Behandlung vorgesehen werden, um den Katalysator (c) zu entfernen.

Das Verfahren zur Entfernung des Katalysators (c) aus dem durch Ringöffnungs-Polymerisation erhaltenen Produkt besteht in einer Adsorptionsbehandlung, wobei ein Adsorptionsmittel eingesetzt wird, wie etwa ein synthetisches Silikat (wie etwa Magnesiumsilikat, Aluminiumsilikat und dergleichen) oder aktivierter Ton, oder es kann eine Neutralisation mit einer basischen Verbindung vorgesehen werden.

Selbst wenn der Katalysator (c) in dem durch Ringöffnungs-Polymerisation erhaltenen Produkt verbleibt, dann hat der erfindungsgemäß vorgesehene Katalysator (c) nicht irgendwelche signifikanten, schädlichen Auswirkungen auf die Reaktivität des Polyols und auf das Isocyanat in der nachfolgenden Umsetzung zur Urethanbildung, im Vergleich mit den Alkali-Katalysatoren der herkömmlichen Technik. Im Hinblick auf die Verhinderung von Verfärbungen ist jedoch vorzugsweise vorgesehen, daß der im durch Ringöffnungs-Polymerisation erhaltenen Produkt enthaltene Katalysator entfernt wird.

Insbesondere dann, wenn die durch Ringöffnungs-Polymerisation erhältlichen Produkte dadurch erzeugt werden, daß heterocyclische Verbindungen der oben angegebenen allgemeinen Formel (5) in denen Q für -O- steht und R für eine zwei-wertige Kohlenwasserstoffgruppe der nachstehenden allgemeinen Formel (8) steht, nämlich für epoxyhaltige Verbindungen, gemeinsam mit der aktiven Wasserstoff enthaltenden Verbindung (b) in Gegenwart des erfindungsgemäß vorgesehenen Katalysators (c) der ringöffnenden Additionspolymerisation unterworfen wird, dann weisen die so erhaltenen Polymere eine weitere strukturelle Besonderheit auf, nämlich einen Anteil an endständigen primären Hydroxylgruppen, der nicht kleiner als 40 % ist und vorzugsweise einen solchen Anteil an endständigen primären Hydroxylgruppen, der nicht kleiner als 60 % ist.

$$-CH_2-\underset{|}{CH}-R^2 \qquad (8)$$

In der vorstehenden allgemeinen Formel (8) steht $R^2$ für eine ein-wertige $C_{1-10}$-Kohlenwasserstoffgruppe, die mit einem oder mehreren Halogenatom(en) substitutiert sein kann.

Als spezifische Beispiele für die vorstehend genannten epoxy-haltigen Verbindungen können hier genannt werden: Propylenoxid, Butylenoxid, Laurylenoxid, Epichlorhydrin, Styroloxid und weitere Verbindungen dieser Art. Es kann auch eine Kombination aus zwei oder mehr Verbindungen dieser Art eingesetzt werden. Bevorzugt werden hier eingesetzt: Propylenoxid, Butylenoxid, Epichlorhydrin und Styroloxid.

Ein dritter Gesichtspunkt der vorliegenden Erfindng betrifft:

- die verwendung der dadurch gekennzeichnet, Polyoxyalkylen-polyole oder -monoole (I) entsprechend dem ersten Gesichtspunkt der vorliegenden Erfindung für die Herstellung von thermohärtenden bzw. duroplastischen Harzen; oder
- die Verwendung der durch Ringöffnungs-Polymerisation erhältlichen Produkte, die nach einem Ver fahren entsprechend dem zweiten Gesichtspunkt der vorliegenden Erfindung erhalten worden sind zur Herstellung thermohärtender bzw. duroplastischer Harze.

Entsprechend diesen Verwendungen werden die vorstehend genannte Polyolzusammensetzungen und/oder die vorstehend genannten Verfahrensprodukte mit einem aromatischen Isocyanat und/oder mit einem aliphatischen Isocyanat (e) umgesetzt, soweit erforderlich in Kombination mit einer anderen Polyolkomponente, nämlich mit einer niedermolekularen, aktiven Wasserstoff enthaltenden Verbindung (z.B. irgendeine dieser Verbindungen, die im Zusammenhang mit dem ersten Gesichtspunkt der vorliegenden Erfindung als Beispiele für aktiven Wasserstoff enthaltende Verbindungen genannt worden sind).

Durch Anwendung der vorstehend genannten Polyolzusammensetzungen und/oder der vorstehend genannten Verfahrensprodukte die je als wesentliche Komponente das erfindungsgemäße Polyoxyalkylen-polyol (I) enthalten, als Polyolkomponenten zur Herstellung von Polyurethanharzen werden bestimmte charakteristische Eigenschaften in

diese Harze eingeführt; diese bestimmten charakteristischen Eigenschaften sind darin zu sehen, daß diese Polyolkomponente hydrophob ist und gegenüber Isocyanatverbindungen hoch reaktiv ist.

Das bedeutet, die aus der erfindungsgemäßen Polyolzusammensetzungen und/oder aus der erfindungsgemäßen Verfahrensprodukten erhältlichen Polyurethanharze zeichnen sich dadurch aus, daß im Verlauf ihres Herstellungsschrittes die Reaktivität gegenüber Isocyanaten hoch ist, und daß die von der Feuchtigkeitabhängigen Eigenschaften der Harze (wie Zugfestigkeit, Bruchdehnung, Biegefestigkeit und dergleichen) gering ist.

Sofern derartige Urethanharze als Beschichtungszusammensetzungen eingesetzt werden, ist weiterhin zu beachten, daß sie besondere charakteristische Eigenschaften aufweisen, wie etwa ausgezeichnete Haftung gegenüber Polyolefin-Kautschuk und -Gummi, sowie gegenüber anderen Polyolefinharzen.

Diese Urethanharze können in verschiedenen Formen und Ausgestaltungen eingesetzt werden, etwa als Urethanschäume, Urethanelastomere, Urethan-Beschichtungszusammensetzungen und dergleichen. Für die Anwendungen als Polyurethanschäume können hier genannt werden: Polstermaterialien für Automobile, Verstärkungs-, Träger- und Kaschierungsmaterialien sowie sonstige Unterlagen, je für Automobile und dergleichen. Für die Anwendung als Urethanelastomere können hier genannt werden: Gießharze, Einbettmassen, Pottingmaterialien und dergleichen. Für die Anwendung als Beschichtungsmaterialien können hier genannt werden: Haftmittelzusammensetzungen, Beschichtungsmittelzusammensetzungen und dergleichen.

Die nachfolgenden Beispiele dienen zur weiteren Erläuterung der Erfindung. Diese Beispiele sollen keinesfalls im Sinne einer Beschränkung des Umfangs der vorliegenden Erfindung gewertet werden.

<u>Beispiel 1:</u>

Ein mit einem Rührer und mit einer Temperaturkontrolleinrichtung ausgerüsteter 200 ml SUS-Autoklav wird beschickt mit 58,1 g Glycerin-propylenoxid-addukt, das ein Molekulargewicht von 1.000 aufweist ("Sannix GP-1000", ein Produkt der Sanyo Chemical Industries) sowie mit 0,97 g Tris(pentafluorphenyl)-boran. Anschließend werden im Verlauf von 12 Std. bei einer Reaktionstemperatur von 70 bis 80°C tropfenweise 110,1 g Propylenoxid zugesetzt. Anschließend läßt man das Reaktionsgemisch 6 h lang bei 75°C reifen; daraufhin wird mit einer wässrigen Lösung von Natriumhydroxid neutralisiert. Daraufhin werden 3,0 g synthetisches Silikatsalz ("Kyowaad 600" ein Produkt der Kyowa Chemical) sowie Wasser zugesetzt; daraufhin wird das Gemisch 3 h lang bei 60°C gehalten. Das Gemisch wird daraufhin aus dem Autoklav entnommen, durch ein 1-Mikron-Filter filtriert und daraufhin getrocknet; danach werden 161,3 g flüssiges Polyoxypropylentriol (mit einem Molekulargewicht von 3.000) erhalten. Die Ausbeute beträgt 97 %, berechnet auf der Basis des Gewichts an eingesetztem Glycerin-propylenoxid-addukt plus zusätzlich hinzugefügtem Propylenoxid. Das so erhaltene Polyoxypropylentriol weist eine Hydroxylzahl von 56,1 auf.

Nachstehend sind die Ergebnisse der aus der $^{1}H$-Kernresonanz-Messung ableitbaren chemischen Verschiebung in Form der δ-Werte des so erhaltenen Polyoxypropylentriol (im $CDCl_3$ als Lösungsmittel) aufgeführt:

$^{1}H$-Kernresonanzspektrum, δ-Werte:

1,11 (s, 150,4H), 2,5 (s, 3H) 3,20 - 3,79 (m, 155,4H).

Aus diesem $^{1}H$-Kernresonanzspektrum ergibt sich - entsprechend dem oben beschriebenen Verfahren - der Anteil an endständigen primären Hydroxylgruppen zu 74 %.

Nachstehend sind die Meßergebnisse, für die aus der chemischen Verschiebung des $^{1}H$-Kernresonanzspektrums abgeleiteten δ-Werte (in $CDCl_3$ als Lösungsmittel) aufgeführt:

$^{1}H$-Kernresonanzspektrum, δ-Werte:

1,13 (s, 150,4H), 3,38 - 3,83 (m, 153,1H), 4,20 - 4,34 (m, 4,5H), 5,16 - 530 (m, 0,8H).

<u>Beispiel 2:</u>

Ein mit einem Rührer und mit einer Temperaturkontrolleinrichtung ausgerüsteter 200 ml SUS-Autoklav wird mit 58,1 g Glycerin-propylenoxid-addukt beschickt, das ein Molekulargewicht von 1.000 aufweist ("Sannix GP-1000", ein Produkt der Sanyo Chemical Industries). Anschließend werden im Verlauf von 12 Stunden bei einer Reaktionstemperatur von 70 bis 80°C tropenweise 110,13 g Propylenoxid und 0,0008 g Tris(pentafluorphenyl)-boran zugesetzt; man läßt das erhaltene Reaktionsgemisch 6 h lang bei 75°C reifen. Anschließend werden 3,0 g synthetisches Silikatsalz ("Kyowaad 1000", ein Produkt der Kyowa Chemical) sowie Wasser hinzugefügt; danach wird das Gemisch 3 h lang bei 60°C gehalten. Daraufhin wird das Gemisch aus dem Autoklav entnommen, durch ein 1-Mikron-Filter filtriert und daraufhin getrocknet; es werden 161,3 g flüssiges Polyoxypropylentriol (mit einem Molekulargewicht von 3.000) erhalten. Die Ausbeute beträgt 97 %. Das so erhaltene Polyoxypropylentriol weist eine Hydroxylzahl von 56,1 auf.

Nachstehend sind die Ergebnisse der aus der $^1$H-Kernresonanzs-Messung ableitbaren chemischen Verschiebung in Form der δ-Werte des so erhaltenen Polyoxypropylentriol (in $CDCl_3$ als Lösungsmittel) aufgeführt:

$^1$H-Kernresonanzspektrum, δ-Werte:

1,11 (s, 150,4H), 2,5 (s, 3H), 3,20 - 3,79 (m, 155,4H).

Aus diesem $^1$H-Kernresonanzspektrum ergibt sich nach dem oben beschriebenen Verfahren der Anteil an endständigen primären Hydroxylgruppen zu 74 %.

Nachstehend sind die Meßergebnisse, für die aus der chemischen Verschiebung des $^1$H-Kernresonanzspektrums abgeleiteten δ-Werte (in $CDCl_3$ als Lösungsmittel) aufgeführt:

$^1$H-Kernresonanzspektrum, δ-Werte:

1,13 (s, 150,4H), 3,38 - 3,83 (m, 153, 1H), 4,20 - 4,34 (m, 4,5H), 5,16 - 5,30 (m, 0,8H).

Beispiel 3:

Im wesentlichen wird das Verfahren nach Beispiel 1 wiederholt; abweichend werden anstelle des Glycerin-propylenoxid-addukt mit einem Molekulargewicht von 1.000 jedoch 87,1 g Glycerin-propylenoxid-addukt mit einem Molekulargewicht von 3.000 ("Sannix GP-3000", ein Produkt der Sanyo Chemical Industries) eingesetzt; weiterhin werden 0,97 g Tris (pentafluorphenyl)-boran und 87,1 g Propylenoxid zugesetzt; als Produkt werden 169,0 g flüssiges Polyoxypropylentriol (mit einem Molekulargewicht von 6.000) erhalten. Die Ausbeute beträgt 97 %. Das so erhaltene Polyoxypropylentriol weist eine Hydroxylzahl von 28,1 auf.

Nachstehend sind die Ergebnisse der aus der $^1$H-Kernresonanzs-Messung ableitbaren chemischen Verschiebung in Form der δ-Werte des so erhaltenen Polyoxypropylentriol (in $CDCl_3$ als Lösungsmittel) aufgeführt:

$^1$H-Kernresonanzspektrum, δ-Werte:

1,11 (s, 305,6H), 2,5 (s, 3H), 3,20 - 3,79 (m, 310,6H).

Aus diesem $^1$H-Kernresonanzspektrum ergibt sich nach dem oben beschriebenen Verfahren der Anteil an endständigen primären Hydroxylgruppen zu 74 %.

Nachstehend sind die Meßergebnisse, für die aus der chemischen Verschiebung des $^1$H-Kernresonanzspektrums abgeleiteten δ-Werte (in $CDCl_3$ als Lösungsmittel) aufgeführt:

$^1$H-Kernresonanzspektrum, δ-Werte:

1,13 (s, 305,6H), 3,38 - 3,83 (m, 308,3H), 4,20 - 4,34 (m, 4,5H), 5,16 - 5,30 (m, 0,8H).

Beispiel 4:

Im wesentlichen wird das Verfahren nach Beispiel 2 wiederholt; abweichend werden anstelle des Glycerin-propylenoxid-addukt mit einem Molekulargewicht von 1.000 jedoch 87,1 g Glycerin-propylenoxid-addukt mit einem Molekulargewicht von 3.000 ("Sannix GP-3000", ein Produkt der Sanyo Chemical Industries) eingesetzt; ferner werden 0,0009 g Tris(pentafluorphenyl)boran und 87,1 g Propylenoxid zugesetzt. Als Produkt werden 169,0 g flüssiges Polyoxypropylentriol (mit einem Molekulargewicht von 6.000) erhalten. Die Ausbeute beträgt 97 %. Das so erhaltene Polyoxypropylentriol weist eine Hydroxylzahl von 28,1 auf.

Nachstehend sind die Ergebnisse der aus der $^1$H-Kernresonanz-Messung ableitbaren chemischen Verschiebung in Form der δ-Werte des so erhaltenen Polyoxypropylentriol (in $CDCl_3$ als Lösungsmittel) aufgeführt:

$^1$H-Kernresonanzspektrum, δ-Werte:

1,11 (s, 305,6H), 2,5 (s, 3H), 3,20 - 3,79 (m, 310,6H).

Aus diesem $^1$H-Kernresonanzspektrum wird nach dem oben beschriebenen Verfahren der Anteil an endständigen primären Hydroxylgruppen zu 74 % bestimmt.

Nachstehend sind die Meßergebnisse für die aus der chemischen Verschiebung des $^1H$-Kernresonanzspektrums abgeleiteten δ-Werte (in $CDCl_3$ als Lösungsmittel) aufgeführt:

$^1H$-Kernresonanzspektrum, δ-Werte:

1,13 (s, 305,6H), 3,38 - 3,83 (m, 308,3H), 4,20 - 4,34 (m, 4,5H), 5,16 - 5,30 (m, 0,8H).

Beispiel 5:

Im wesentlichen wird das Verfahren nach Beispiel 2 wiederholt; abweichend werden anstelle von Glycerinpropylenoxid-addukt mit einem Molekulargewicht von 1.000 jedoch 87,1 g Polypropylenglycol mit einem Molekulargewicht von 1.000 ("Sannix PP-1000", ein Produkt der Sanyo Chemical Industries) eingesetzt; weiterhin werden 0,0009 g Tris(pentafluorphenyl)-boran und 87,1 g Propylenoxid zugesetzt. Als Produkt werden 169,0 g flüssiges Polyoxypropylen-glycol (mit einem Molekulargewicht von 2.000) erhalten. Die Ausbeute beträgt 97 %. Das so erhaltene Polyoxypropylen-glycol weist eine Hydroxylzahl von 55,9 auf.

Aus dem $^1H$-Kernresonanzspektrum wird nach dem oben beschriebenen Verfahren der Anteil an endständigen primären Hydroxylgruppen zu 72 % bestimmt.

Beispiel 6:

Ein mit einem Rührer und mit einer Temperaturkontrolleinrichtung ausgerüsteter 200 ml SUS-Autoklav wird beschickt mit 134 g Propylen-dithiocarbonat und mit 8,79 g Tris(pentafluorphenyl)-boran. Die Umsetzung wird 12 h lang bei einer Reaktionstemperatur von 120°C durchgeführt. Anschließend läßt man das Reaktionsgemisch 6 h lang bei 120°C reifen. Anschließend wird das Reaktionsgemisch in 500 g n-Hexan gegossen, wobei das Poly(propylen-dithiocarbonat) als Niederschlag ausfällt. Dieser Niederschlag wird abfiltriert, wobei 109 g Poly(propylen-dithiocarbonat) erhalten werden. Die Ausbeute beträgt 81 %, berechnet auf der Basis des Gewichts an eingesetztem Propylen-dithiocarbonat. Das so erhaltene Poly(propylen-dithiocarbonat) weist ein Molekulargewicht von 18.500 auf.

Vergleichsbeispiel 1:

Im wesentlichen wird das Verfahren nach Beispiel 1 in der Vorrichtung nach Beispiel 1 wiederholt; abweichend werden anstelle von Tris(pentafluorphenyl)-boran jedoch 0,63 g Kaliumhydroxid eingesetzt. 110,1 g Propylenoxid wird im Verlauf von 12 h bei einer Reaktionstemperatur von 120 bis 130°C tropfenweise zugesetzt. Man läßt das Reaktionsgemisch 6 h lang bei 120°C reifen. Anschließend werden 3,0 g synthetisches Silikatsalz ("Kyowaad 600", ein Produkt der Kyowa Chemical) sowie 2 g Wasser hinzugefügt; daraufhin wird das Gemisch 3 h lang bei 60°C gehalten. Anschließend wird das Gemisch aus dem Autoklav entnommen, durch ein 1-Mikron-Filter filtriert und daraufhin getrocknet; Es werden 161,3 g flüssiges Polyoxypropylentriol (mit einem Molekulargewicht von 3.000) erhalten. Die Ausbeute beträgt 97 %. Das so erhaltene Polyoxypropylentriol weist eine Hydroxylzahl von 56,1 auf.

Nachstehend sind die Ergebnisse der aus der $^1H$-Kernresonanz-Messung ableitbaren chemischen Verschiebung in Form der δ-Werte des so erhaltenen Polyoxypropylentriol (in $CDCl_3$ als Lösungsmittel) aufgeführt:

$^1H$-Kernresonanzspektrum, δ-Werte:

1,11 (s, 150,4H), 2,5 (s, 3H), 3,20 - 3,79 (m, 155,4H).

Aus diesem $^1H$-Kernresonanzspektrum wird nach dem oben beschriebenen Verfahren der Anteil an endständigen primären Hydroxylgruppen zu 2 % bestimmt.

Nachstehend sind die Meßergebnisse für die aus der chemischen Verschiebung des $^1H$-Kernresonanzspektrums abgeleiteten δ-Werte (in $CDCl_3$ als Lösungsmittel) aufgeführt:

$^1H$-Kernresonanzspektrum, δ-Werte:

1,13 (s, 150,4H), 3,38 - 3,83 (m, 155,4H), 4,20 - 4,34 (m, 0,1H), 5,16 - 5,30 (m, 2,9H).

Vergleichsbeispiel 2:

Im wesentlichen wird das Verfahren nach Beispiel 6 wiederholt; abweichend werden anstelle von Tris(pentafluorphenyl)-boran jedoch 2,4 g $BF_3$-Etherat eingesetzt. Es werden 54 g Poly(propylen-dithiocarbonat) erhalten. Die

Ausbeute beträgt 54 %, berechnet auf der Basis des eingesetzten Propylendithiocarbonat. Das so erhaltene Poly (propylen-dithiocarbonat) weist ein Molekulargewicht von 16.700 auf.

Herstellungsbeispiel 1:

Durch einheitliches Vermischen von

- 434,9 g des nach Beispiel 1 erhaltenen Polyoxypropylentriol (mit einem Molekulargewicht von 3.000),
- 219,2 g Tolylen-diisocyanat,
- 18,7 g Wasser,
- 0,57 g Zinn(II)octoat,
- 5,26 g Dioctyl-phthalat,
- 5,3 g Polyoxypropylen-glycol (mit einem Molekulargewicht von 2.000),
- 0,33 g Triethylendiamin,
- 2,2 g N-Methylmorpholin, und
- 6,6 g Schaumbildner ("L-520", ein Produkt der Nippon Unicar)

wird ein Gemisch erzeugt. Dieses Gemisch wird einheitlich in ein Gefäß (mit Abmessungen von 30 cm x 30 cm) gegossen; man läßt das Gemisch expandieren um einen Urethanschaum zu erhalten.

Zur Schaumbildung: Die 100 %-Anstiegzeit beträgt 1 min. Die Viskosität zum Zeitpunkt der Schaumbildung wird mit Hilfe eines Schwingungs-Viskosimeters geprüft; es wird festgestellt, daß die Viskosität von 100.000 cps innerhalb von 40 sec nach dem Vermischen des schäumenden Harzes erreicht wird.

Vergleichs-Herstellungsbeispiel 1:

Im wesentlichen in gleicher Weise wie Herstellungsbeispiel 1 wird ein Urethanschaum erzeugt; abweichend werden anstelle des nach Beispiel 1 erhaltenen Polyoxypropylentriol (mit einem Molekulargewicht von 3.000) jedoch 434,9 g des nach Vergleichsbeispiel 1 erhaltenen Polyoxypropylentriol (mit einem Molekulargewicht von 3.000) eingesetzt.

Zur Schaumbildung: Die 100 %-Anstiegzeit beträgt 3 min. Die Viskosität zum Zeitpunkt der Schaumbildung wird mit Hilfe eines Schwingungs-Viskometer geprüft; es wird festgestellt, daß die Viskosität von 100.000 cps des schäumenden Harzes innerhalb von 60 sec nach dem Vermischen erreicht wird.

Herstellungsbeispiel 2:

Ein mit Rührer und Temperaturkontrolleinrichtung versehener 500 ml 4-Hals-Kolben wird beschickt mit:

- 115,2 g 4,4'-Diphenylmethan-diisocyanat,
- 264,4 g Polypropylen-glycol (mit einem Molekulargewicht von 2.000), das nach Beispiel 5 erhalten worden ist, und
- 20,4 g Ethylenglycol.

Nach einer Umsetzung im Verlauf von 5 h bei 68°C wird ein Polyurethanelastomer erhalten.

Zum Ablauf der Reaktion: Es wird nachstehende prozentuale Umsetzung (prozentualer Verbrauch) der Isocyanatgruppen festgestellt:

- nach 1 h sind 72 % der Isocyanatgruppen verbraucht;
- nach 2 h sind 93 % der Isocyanatgruppen verbraucht; und

- nach 2,5 h sind 100 % der Isocyanatgruppen verbraucht.

Verschiedene physikalische Eigenschaften, wie das mittlere gewichtsmäßige Molekulargewicht, das mittlere zahlenmäßige Molekulargewicht (bestimmt nach Gelpermeations-Chromatographie), die Reißfestigkeit und die Bruchdehnung des so erhaltenen Polyurethanelastomer sind in der nachstehenden Tabelle 1 aufgeführt.

Vergleichs-Herstellungsbeispiel 2:

Im wesentlichen in gleicher Weise wie das Herstellungsbeispiel 2 wird ein Polyurethanelastomer erzeugt; abweichend werden anstelle des nach Beispiel 5 erhaltenen Polypropylenglycol (mit einem Molekulargewicht von 2.000) jedoch 264,4 g Polypropylenglycol mit einem Molekulargewicht von 2.000, mit einer Hydroxylzahl von 55,9 und mit einem Anteil an endständigen primären Hydroxylgruppen von 2 % ("Sannix PP-2000", ein Produkt der Sanyo Chemical Industries) eingesetzt.

Zum Ablauf der Reaktion: Es wird nachstehende prozentuale Umsetzung (prozentualer Verbrauch) der Isocyanatgruppen festgestellt:

- nach 1 h sind 49 % der Isocyanatgruppen verbraucht;
- nach 2 h sind 79 % der Isocyanatgruppen verbraucht;
- nach 3 h sind 93 % der Isocyanatgruppen verbraucht;
- nach 4 h sind 98 % der Isocyanatgruppen verbraucht; und
- nach 5 h sind 100 % der Isocyanatgruppen verbraucht.

Verschiedene physikalische Eigenschaften des so erhaltenen Polyurethanelastomer, wie etwa Reißfestigkeit, und Bruchdehnung sind in der nachfolgenden Tabelle 1 aufgeführt.

Tabelle 1

| | Beispiel 2 | Vergl. Beispiel 2 |
|---|---|---|
| mittleres gewichtsmäßiges Molekulargewicht | 210.000 | 170.000 |
| mittleres zahlenmäßiges Molekulargewicht | 91.000 | 74.000 |
| Reißfestigkeit ($kg/cm^2$) | 437 | 286 |
| Bruchdehnung (%) | 760 | 750 |

Aus einem Vergleich der Beispiele 1 und 2 mit den Vergleichsbeispielen 1 und 2 ergibt sich, daß die erfindungsgemäßen Polyoxyalkylen-polyole (I) eine höhere Reaktivität gegenüber Isocyanatgruppen aufweisen, im Vergleich mit herkömmlichen Polyoxyalkylen-polyolen.

Weiterhin ergibt sich aus Tabelle 1, daß die mit Hilfe der erfindungsgemäßen Polyoxyalkylen-polyole (I) erhaltenen Polyurethanelastomere ausgezeichnete physikalische Eigenschaften aufweisen, hier insbesondere höheres Molekulargewicht, höhere Reißfestigkeit trotz äquivalenter Bruchdehnung, im Vergleich mit den nach den Vergleichsbeispielen erhaltenen Produkten.

Nach der technischen Lehre der vorliegenden Erfindung können durch Ringöffnungs-Polymerisation erhältliche Produkte aus heterocyclischen Verbindungen in guten Ausbeuten erhalten werden. Insbesondere, wenn Alkylenoxide einer ringöffnenden Additionspolymerisation unterworfen werden, werden Polyoxyalkylen-polyole erhalten, die eine ausgezeichnete Reaktivität aufweisen, ohne, daß deren Hydrophobizität beeinträchtigt ist. Durch Verwendung dieser Polyoxyalkylen-polyole als Polyolkomponenten ist es möglich, thermohärtende bzw. duroplastische Harze in hohen Umsetzungsgeschwindigkeiten herzustellen, die ausgezeichnete physikalische Eigenschaften aufweisen (Reißfestigkeit, Biegungsfestigkeit) und deren physikalische Eigenschaften durch Feuchtigkeitseinwirkung nicht verschlechtert werden.

Die erfindungsgemäßen Polyoxyalkylen-polyole und -monoole (I) sind geeignet als Ausgangsmaterialien für die Herstellung von Ölen zur Behandlung von Textilien, für die Herstellung von oberflächenaktiven Mitteln und Tensiden, für die Herstellung von Schaumverhütungsmitteln und für die Herstellung anderer oberflächenaktiver Substanzen und grenzflächenaktiver Mittel einschließlich Tensiden und Surfactants.

## Patentansprüche

**1.** Ein Polyoxyalkylen-polyol oder -monool (I) der nachstehenden allgemeinen Formel (1), bei dem nicht weniger als 40% der endständig angeordneten, hydroxyl-haltigen Gruppen des Polyoxyalkylen-monool oder bei dem nicht weniger als 60% der endständig angeordneten hydroxyl-haltigen Gruppen des Polyoxyalkylen-polyol, also der Gruppen -AO-H primäre Hydroxylgruppen enthaltende Gruppen der nachstehenden allgemeinen Formel (2) sind:

$$R^1\text{-[-(ZO)}_p\text{-(AO)}_q\text{-H]}_m \quad (1)$$

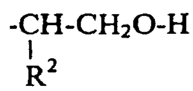

(2)

wobei in der Formel (1):

$R^1$ für eine m-wertige Gruppe steht, die durch Entfernung von einem oder mehreren aktiven Wasserstoffatom (en) aus den nachfolgenden Verbindungen erhalten worden ist, nämlich Wasser, eine Alkoholverbindung, eine Phenolverbindung, eine amino-haltige Verbindung, eine thiol-haltige Verbindung und eine Phosphorsäureverbindung;
Z für eine $C_{2-12}$-Alkylengruppe oder für eine $C_{6-12}$-Cycloalkylengruppe steht, von denen jede wenigstens ein Halogenatom und/oder eine Arylgruppe als Substituent(en) enthalten kann;
A für eine $C_{3-12}$-Alkylengruppe oder für eine $C_{6-12}$-Cycloalkylengruppe steht, von denen jede wenigstens ein Halogenatom und/oder eine Arylgruppe als Substituent(en) enthalten kann;
"m" eine ganze Zahl von 1 oder 2 bis 100 ist;
"p" eine ganze Zahl von 0 oder 1 oder größer ist; und
"q" eine ganze Zahl von 1 oder größer ist;

mit der weiteren Maßgabe, dass die Summe aus "p+q" einen Wert von 1 bis 200 hat; und ferner, wobei in der Formel (2):

$R^2$ für eine $C_{1-10}$-Alkylgruppe oder für eine $C_{6-10}$-Arylgruppe steht, von denen jede mit einem oder mehreren Halogenatom(en) substituiert sein kann.

**2.** Das Polyoxyalkylen-polyol oder -monool (I) nach Anspruch 1,
**dadurch gekennzeichnet, dass**
$R^1$ für eine Gruppe steht, die aus Wasser, einer Alkoholverbindung oder einer aminohaltigen Verbindung nach Entfernung von deren aktiven Wasserstoffatom(en) erhalten worden ist.

**3.** Das Polyoxyalkylen-monool (I) nach Anspruch 1 oder 2,
**dadurch gekennzeichnet, dass**
nicht weniger als 60% der endständig angeordneten, hydroxylhaltigen Gruppen, also der Gruppen -AO-H primäre Hydroxylgruppen enthaltende Gruppen der allgemeinen Formel (2) sind.

**4.** Ein Verfahren zur Herstellung von, durch Ringöffnungspolymerisation erhältlichen Produkten, wobei eine heterocyclische Verbindung (d) der nachstehenden allgemeinen Formel (5) zusammen mit einer aktive(n) Wasserstoffatom(e) enthaltenden Verbindung (b) der nachstehenden allgemeinen Formel (3) in Gegenwart von wenigstens einem Katalysator (c), ausgewählt aus Verbindungen mit den nachstehenden allgemeinen Formeln (4-1), (4-2) und (4-3) einer ringöffnenden Additionspolymerisation unterworfen wird:

$$R^1\text{-}[\text{-}(ZO)_p\text{-}H]_m \tag{3}$$

$$X\text{-}(\text{-}R^3)_3 \tag{4-1}$$

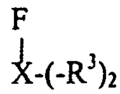

(4-2)

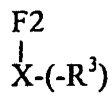

(4-3)

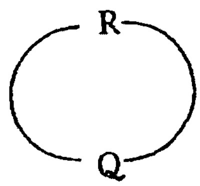

(5)

wobei:

In der Formel (3)

$R^1$ für eine m-wertige Gruppe steht, die durch Entfernung von einem oder mehreren aktiven Wasserstoffatom(en) aus den nachstehenden Verbindungen erhalten worden ist, nämlich Wasser, eine Alkoholverbindung, eine Phenolverbindung, eine amino-haltige Verbindung, eine carboxyl-haltige Verbindung, eine thiol-haltige Verbindung und eine Phosphorsäureverbindung;

Z für eine $C_{2\text{-}12}$-Alkylengruppe oder für eine $C_{6\text{-}12}$-Cycloalkylengruppe steht, von denen jede wenigstens ein Halogenatom und/oder eine Arylgruppe als Substituent(en) enthalten kann;

"m" eine ganze Zahl von 1 oder 2 bis 100 ist; und

"p" eine ganze Zahl von 0 oder 1 bis 199 ist;

ferner in jeder der Formeln (4-1), (4-2) und (4-3):

X für ein Boratom oder für ein Aluminiumatom steht;

F für ein Fluoratom steht; und

$R^3$ für eine substituierte oder unsubstituierte Phenylgruppe der nachstehenden allgemeinen Formel (6) und/oder für eine tertiäre Alkylgruppe der nachstehenden allgemeinen Formel (7) steht.

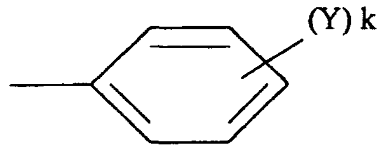

(6)

wobei in der Formel (6)

Y für ein Wasserstoffatom, für eine $C_{1-4}$-Alkylengruppe, für ein Halogenatom, für eine Nitrogruppe oder für eine Cyanogruppe steht; und

"k" eine ganze Zahl von 0 bis 5 ist;

mit der weiteren Maßgabe, dass dann, wenn "k" einen Wert von 2 oder größer hat, die dann vorhandene Mehrzahl von Y-Gruppen gleich oder verschieden sein können;

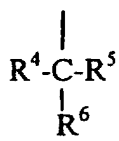

(7)

wobei in der Formel (7)

$R^4$, $R^5$ und $R^6$ je unabhängig voneinander für eine $C_{1-4}$-Alkylgruppe stehen, mit der weiteren Maßgabe, dass dann, wenn eine Mehrzahl von $R^3$-Gruppen vorhanden ist, diese gleich oder verschieden sein können; und

in der Formel (5)

R für eine $C_{3-12}$-Alkylengruppe steht, die wenigstens ein Halogenatom und/oder eine Arylgruppe als Substituenten enthalten kann;

Q für eine zwei-wertige organische Gruppe steht, die ausgewählt ist aus -O-, -S-, -NH-, -O(CO)O-, -S(CO)O-, -O(CS)O-, -O(CO)S-, -O(CS)S-, -S(CS)O-, -S(CO)S-, -S(CS)S-, -COO-, -CSO-, -COS-, -CSS-, -CONH- und $-N=C(-R^7)-O-$

wobei
$R^7$ für eine $C_{1-12}$-Alkylgruppe oder für eine $C_{6-12}$-Cycloalkylgrzuppe steht, die je mit einer Alkylgruppe oder mit einer $C_{6-12}$-Arylgruppe substituiert sein können, die ihrerseits wiederum mit einem oder mehreren Halogenatom (en) substituiert sein können.

**5.** Das Herstellungsverfahren nach Anspruch 4,
**dadurch gekennzeichnet, dass**
in der heterocyclischen Verbindung (d) gemäß der Formel (5) Q für -O- steht; und
R für eine zwei-wertige Kohlenwasserstoffgruppe der nachstehenden allgemeinen Formel (8) steht:

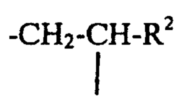

(8)

wobei in der Formel (8)

$R^2$ für eine ein-wertige $C_{1-10}$-Kohlenwasserstoffgruppe steht, die mit einem oder mehreren Halogenatom(en) substituiert sein kann.

**6.** Das Herstellungsverfahren nach Anspruch 5, zur Herstellung von, durch Ringöffnungspolymerisation erhältlichen Produkten, bei denen nicht weniger als 40 % der endständigen Hydroxylgruppen primäre Hydroxylgruppen sind.

**7.** Das Herstellungsverfahren nach Anspruch 5, zur Herstellung von, durch Ringöffnungspolymerisation erhältlichen Produkten, bei denen nicht weniger als 60 % der endständigen Hydroxylgruppen primäre Hydroxylgruppen sind.

**8.** Verwendung eines Polyoxyalkylen-polyol oder monool (I) nach einem der Ansprüche 1 bis 3 als Polyolzusammensetzung für die Herstellung thermohärtender bzw. duroplastischer Harze.

**9.** Verwendung eines Polyoxyalkylen-polyol oder -monool (I) nach einem der Ansprüche 1 bis 3 als Polyolzusamrnensetzung für die Herstellung von Polyurethanharzen.

**10.** Verwendung eines Polyoxyalkylen-polyol oder -monool (I) nach einem der Ansprüche 1 bis 3 als Polyolzusammensetzung für die Herstellung oberflächenaktiver Mittel bzw. Tenside.

**11.** Verwendung eines durch Ringöffnungspolymerisation erhältlichen Produktes nach einem der Ansprüche 4 bis 7 als Polyolzusammensetzung für die Herstellung von Polyurethanharzen.

## Claims

**1.** A polyoxyalkylene polyol or polyoxyalkylene monool (I) of the general formula (1) below, wherein not less than 40% of the terminally located hydroxyl-containing groups of the polyoxyalkylene monool or not less than 60% of the terminally located hydroxyl-containing groups of the polyoxyalkylene polyol, namely -AO-H groups, are primary hydroxyl-containing groups of the general formula (2) below:

$$R^1\text{-}[\text{-}(ZO)_p\text{-}(AO)_q\text{-}H]_m \quad (1)$$

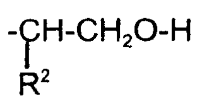

(2)

wherein: in the formula (1):

$R^1$ is a group having a valence of m as derived from a compound selected from the group consisting of water, an alcohol compound, a phenol compound, an amino-containing compound, a thiol-containing compound and a phosphoric acid compound by removal of its active hydrogen atom or atoms;
Z is an alkylene group containing 2 to 12 carbon atoms or a cycloalkylene group containing 6 to 12 carbon atoms, each of which may contain at least one halogen atom or aryl group or both as substituent(s);
A is an alkylene group containing 3 to 12 carbon atoms or a cycloalkylene group containing 6 to 12 carbon atoms, each of which may contain at least one halogen atom or aryl group or both as substituent(s);
"m" is an integer of 1 or 2 to 100;
"p is an integer of 0 or 1 or more;
"q" is an integer of 1 or more;

with the further proviso that the sum of (p + q) equal 1 to 200; and
wherein in the formula (2):

$R^2$ is an alkyl group containing 1 to 10 carbon atoms or an aryl group containing 6 to 10 carbon atoms, each of which may be substituted by one or several halogen atom(s).

**2.** The polyoxyalkylene polyol or polyoxyalkylene monool (I) according to Claim 1,
**wherein**
$R^1$ is a group derived from water, an alcohol compound or an amino-containing compound by removal of its active hydrogen atom or atoms.

**3.** The polyoxyalkylene monool (I) according to Claim 1 or 2,
**wherein**
not less than 60 % of the terminally located hydroxyl-containing groups, namely -AO-H groups, are primary hydroxyl-containing groups of the general formula (2).

**4.** A method of producing ring-opening polymerization products,
**which comprises**
subjecting a heterocyclic compound (d) of the general formula (5) below to ring-opening addition polymerization with
an active hydrogen-containing compound (b) of the general formula (3) below
in the presence of at least one catalyst (c) selected from the group consisting of compounds having the general formula (4-1) below, compounds of the general formula (4-2) below and compounds of the general formula (4-3) below:

$$R^1\text{-}[\text{-}(ZO)_p\text{-}H]_m \quad (3)$$

$$X\text{-}(\text{-}R^3)_3 \quad (4\text{-}1)$$

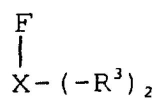
(4-2)

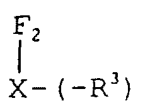
(4-3)

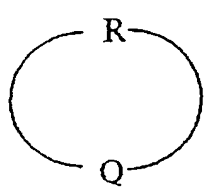
(5)

wherein: in the formula (3):

$R^1$ is a group having a valence of m as derived from a compound selected from the group consisting of water, an alcohol compound, a phenol compound, an amino-containing compound, a carboxyl-containing compound, a thiol-containing compound and a phosphoric acid compound by removal of its active hydrogen atom or atoms;

Z is an alkylene group containing 2 to 12 carbon atoms or a cycloalkylene group containing 6 to 12 carbon atoms, each of which may contain at least one halogen atom or aryl group or both as substituent(s);
"m" is an integer of 1 or 2 to 100; and p is an integer of 0 or 1 to 199;

further in each of formulae (4-1), (4-2) and (4-3):

X represents a boron atom or aluminum atom;
F represents a fluorine atom; and
$R^3$ represents a substituted or unsubstituted phenyl group of the general formula (6) below and/or a tertiary alkyl group of the general formula (7) below:

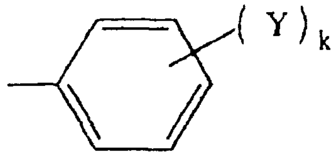

(6)

wherein in the formula (6):

Y represents a hydrogen atom, an alkyl group containing 1 to 4 carbon atoms, a halogen atom, a nitro group or a cyano group; and
"k" represents an integer of 0 to 5,

with the further proviso:

when k is 2 or more, a plurality of Y groups may be the same or different;

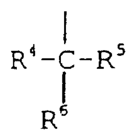

(7)

wherein in the formula (7):

$R^4$, $R^5$ and $R^6$ each independently represents an alkyl group containing 1 to 4 carbon atoms, and, when there are a plurality of $R^3$ groups, they may be the same or different; and

wherein in the formula (5):

R is an alkylene group containing 3 to 12 carbon atoms, which may contain at least one halogen atom or aryl group or both as substituent(s);
Q is a divalent organic group selected from the group consisting of -O-, -S-; -NH-, -O(CO)O-, -S(CO)O-, -O(CS)O-, -O(CO)S-, -O(CS)S-, -S(CS)O-, -S(CO)S-, -S(CS)S-,
-COO-, -CSO-, -COS-; -CSS-, -CONH-, and -N=C(R7)-O-

in which R7 represents an alkyl group containing 6 to 12 carbon atoms, a cycloalkyl group containing 6 to 12 carbon atoms, which may be substituted by an alkyl group, or an aryl group containing 6 to 12 carbon atoms, which may be substituted by one or several halogen atom(s).

**5.** The production method according to Claim 4,
**wherein**,
in the heterocyclic compound (d) according to formula (5): Q is -O-; and
R is a divalent hydrocarbon group of the formula (8) below:

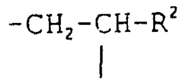

(8)

wherein $R^2$ represents a monovalent hydrocarbon group containing 1 to 10 carbon atoms, which may be substituted by one or several halogen atom(s).

**6.** The production method according to Claim 5,
for producing the ring-opening polymerization product in which not less than 40 % of the terminal hydroxyl groups are primary hydroxyl groups.

**7.** The production method according to Claim 5,
for producing the ring ring-opening polymerization product in which not less than 60 % of the terminal hydroxyl groups are primary hydroxyl groups.

**8.** Use of a polyoxyalkylene polyol or polyoxyalkylene monool (1) according to anyone of the claims 1 to 3,
as a polyol composition in a manufacturing process for preparing thermosetting resins.

**9.** Use of a polyoxyalkylene polyol or polyoxyalkylene monool (I) according to
anyone of the claims 1 to 3,
as a polyol composition in a manufacturing process for preparing polyurethane resins.

**10.** Use of a polyoxyalkylene polyol or polyoxyalkylene monool (I) according to anyone of the claims 1 to 3,
as a polyol composition in a manufacturing process for preparing surfactants.

**11.** Use of the ring-opening polymerization products as obtainable by the method according to anyone of the claims 4 to 7,
as a polyol composition in a manufacturing process for preparing polyurethane resins.

**Revendications**

**1.** Un polyoxy-alkylène polyol ou polyoxy-alkylène monool (1)
qui répond à la formule générale (1) ci-après,
dans lequel non moins de 40% des groupes terminaux contenant de l'hydroxyle du polyoxy-alkylène monool ou dans lequel non moins de 60% des groupes terminaux contenant de l'hydroxyle du polyoxy-alkylène polyol, notamment des groupes -AO-H, sont des groupes contenant des groupes hydroxyle primaires,
qui répondent à la formule générale (2) ci-après,

$$R^1\text{-[-(ZO)}_p\text{-(AO)}_q\text{ -H]}_m \qquad (1)$$

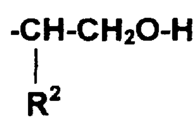

**(2)**

dans la formule (1)
**$R^1$** représentant un groupe m-valent obtenu d'un composé choisi parmi le groupe comprenant l'eau, un composé d'alcool, un composé de phénol, un composé contenant de l'amino, un composé contenant du thiol, et un composé d'acide phosphorique, par enlèvement d'un ou de plusieurs atome(s) d'hydrogène actif ;
**Z** représentant un groupe alkylène ayant 2 à 12 atomes de carbone ou un groupe cycloalkylène ayant 6 à 12 atomes de carbone, dont chacun peut contenir au moins un atome d'halogène et/ou un groupe aryle en tant que

substituant(s) ;
**A** représentant un groupe alkylène ayant 3 à 12 atomes de carbone ou un groupe cycloalkylène ayant 6 à 12 atomes de carbone, dont chacun peut contenir au moins un atome d'halogène et/ou un groupe aryle en tant que substituant(s) ;
**m** étant un entier égal à 1 ou un entier entre 2 et 100 ;
**p** étant un entier égal à 0 ou égal ou supérieur à 1 ;
**q** étant un entier égal ou supérieur à 1 ;
avec la condition supplémentaire que la somme de (p+q) est égale à une valeur entre 1 et 200 ;
et, dans la formule (2)
$\mathbf{R^2}$ représentant un groupe alkyle ayant 1 à 10 atomes de carbone ou un groupe aryle ayant 6 à 10 atomes de carbone, dont chacun peut être substitué avec un ou plusieurs atome(s) d'halogène.

**2.** Le polyoxy-alkylène polyol ou polyoxy-alkylène monool (I) conformément à la revendication 1,
**caractérisé en ce que :**

$\mathbf{R^1}$ représente un groupe obtenu d'eau, d'un composé d'alcool ou d'un composé contenant de l'amino, par enlèvement de leur(s) atome(s) d'hydrogène actif.

**3.** Le polyoxy-alkylène monool (I) conformément à la revendication 1 ou 2,
**caractérisé en ce que** :

non moins de 60% des groupes terminaux contenant de l'hydroxyle, notamment des groupes -AO-H, sont des groupes contenant des groupes hydroxyle primaires, qui répondent à la formule générale (2).

**4.** Un procédé de fabrication de produits obtenus par polymérisation par ouverture de cycle,
dans lequel un composé hétérocyclique (d) qui répond à la formule générale (5) ci-après est soumis à une polymérisation d'addition par ouverture de cycle, et ceci avec un composé (b) contenant un (des) atome(s) d'hydrogène actif, qui répond à la formule générale ci-après (3)
en présence d'au moins un catalyseur (c) qui est choisi d'un groupe comprenant les composés qui répondent aux formules générales ci-après (4-1), (4-2) et (4-3).

$$R^1\text{-}[\text{-}(ZO)_p\text{-}H]_m \qquad (3)$$

$$X\text{-}(\text{-}R^3)_3 \qquad (4-1)$$

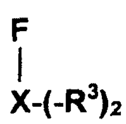

**(4-2)**

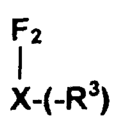

**(4-2)**

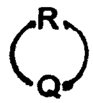

(5)

dans la formule (3)

**$R^1$** représentant un groupe m-valent obtenu d'un composé choisi parmi le groupe comprenant l'eau, un composé d'alcool, un composé de phénol, un composé contenant de l'amino, un composé contenant du carboxyle, un composé contenant du thiol, et un composé d'acide phosphorique, par enlèvement d'un ou de plusieurs atome(s) d'hydrogène actif ;

**Z** représentant un groupe alkylène ayant 2 à 12 atomes de carbone ou un groupe cycloalkylène ayant 6 à 12 atomes de carbone, dont chacun peut contenir au moins un atome d'halogène et/ou un groupe aryle en tant que substituant(s) ;

**m** étant un entier égal à 1 ou un entier entre 2 et 100 et

**p** étant un entier égal à 0 ou un entier entre 1 et 199 ;

et dans chacune des formules (4-1 ), (4-2) et (4-3) :

**X** représentant un atome de bore ou un atome d'aluminium ;

**F** représentant un atome de fluor ;

**$R^3$** représentant un groupe phényle substitué ou non substitué de la formule générale (6) ci-après et/ou un groupe tertiaire alkyle de la formule générale (7) ci-après :

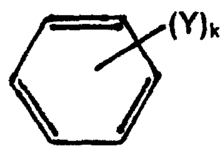

(6)

dans la formule (6)

**Y** représentant un atome d'hydrogène, un groupe alkyle ayant 1 à 4 atome(s) de carbone, un atome d'halogène, un groupe nitro ou un groupe cyano ; et

**k** représentant un entier entre 0 et 5 ;

avec la condition supplémentaire que lorsque k est égale ou supérieur à 2, une pluralité de groupes Y peut être identique ou différente ;

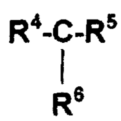

(7)

dans la formule (7)

**$R^4$, $R^5$**, et **$R^6$** représentant indépendamment l'un de l'autre un groupe alkyle ayant 1 à 4 atome(s) de carbone, et avec la condition supplémentaire que lorsque il y a une pluralité de groupes **$R^3$**, elle peut être la même ou différente ;

et dans la formule (5)

**R** représentant un groupe alkylène ayant 3 à 12 atomes de carbone qui peut contenir au moins un atome d'halogène et/ou un groupe aryle en tant que substituant(s) ;

**Q** représentant un groupe organique divalent choisi parmi le groupe comprenant -O- , -S-, -NH-, -O(CO)O-, -S(CO)O-, -O(CS)O-, -O(CO)S-, -O(CS)S-, -S(CS)O-, -S(CO)S-, -S(CS)S-, -COO-, -CSO-, -COS-, -CSS-, -CONH- et -N=C($R^7$)-O-

dans ce dernier

**$R^7$** représentant un groupe alkyle ayant 1 à 12 atomes de carbone ou un groupe cycloalkyle ayant 6 à 12 atomes de carbone, dont chacun peut être substitué avec un groupe alkyle ou avec un groupe aryle ayant 6 à 12 atomes

de carbone, ces derniers groupes pouvant être substitués avec un ou plusieurs atome(s) d'halogène.

5. Le procédé de fabrication conformément à la revendication 4,
**caractérisé en ce que** :

dans le composé hétérocyclique (d) qui répond à la formule générale (5) **Q** représente -O- ;

**R** représente un groupe bivalent hydrocarbure de la formule générale (8) ci-après :

$$-CH_2-\underset{|}{CH}-R^2 \qquad (8)$$

dans laquelle
$\mathbf{R^2}$ représente un groupe monovalent hydrocarbure ayant 1 à 10 atomes de carbones qui peut être substitué avec un ou plusieurs atome(s) d'halogène.

6. Le procédé de fabrication conformément à la revendication 5,
pour la fabrication de produits obtenus par ouverture de cycle dans lesquels non moins de 40% des groupes terminaux hydroxyle sont des groupes hydroxyle primaires.

7. Le procédé de fabrication conformément à la revendication 5,
pour la fabrication de produits obtenus par ouverture de cycle dans lesquels non moins de 60% des groupes terminaux hydroxyle sont des groupes hydroxyle primaires.

8. L'emploi
d'un polyoxy-alkylène polyol ou polyoxy-alkylène monool (1) conformément à une des revendications 1 à 3, comme composition de polyol dans le procédé de fabrication de résines thermodurcissables.

9. L'emploi
d'un polyoxy-alkylène polyol ou polyoxy-alkylène monool (I) conformément à une des revendications 1 à 3, comme composition de polyol dans le procédé de fabrication de résines polyuréthane.

10. L'emploi
d'un polyoxy-alkylène polyol ou polyoxy-alkylène monool (I) conformément à une des revendications 1 à 3, comme composition de polyol dans le procédé de fabrication de tensioactifs.

11. L'emploi
des produits à obtenir par ouverture de cycle conformément à une des revendications 4 à 7, comme composition de polyol dans le procédé de fabrication de résines de polyuréthane.